# EUROPÄISCHE PATENTSCHRIFT

(11) **EP 3 966 918 B1**
(45) Veröffentlichungstag und Bekanntmachung des Hinweises auf die Patenterteilung: **17.06.2026**
(21) Anmeldenummer: 20723101.0
(22) Anmeldetag: 29.04.2020
(51) Int. Cl.: H02M 1/00, H02M 1/08

(54) **ANLAUFSCHALTUNG, ANSTEUERSCHALTUNG UND VERFAHREN ZUR SPANNUNGSVERSORGUNG EINER STEUERVORRICHTUNG**
STARTING CIRCUIT, ACTUATION CIRCUIT, AND METHOD FOR SUPPLYING A VOLTAGE TO A CONTROLLER
CIRCUIT DE DÉMARRAGE, CIRCUIT DE COMMANDE ET PROCÉDÉ D'ALIMENTATION ÉLECTRIQUE D'UN DISPOSITIF DE COMMANDE

(30) Priorität: 09.05.2019 DE 102019206692
(43) Veröffentlichungstag der Anmeldung: 16.03.2022
(73) Patentinhaber: Robert Bosch GmbH, 70442 Stuttgart (DE)
(72) Erfinder: HEMBACH, Florian, 1100 Wien (AT); BURGSTALLER, Lukas, 1050 Wien (AT); SHATURA, Anna, 70439 Stuttgart (DE)
(86) Internationale Anmeldenummer: PCT/EP2020/061904
(87) Internationale Veröffentlichungsnummer: WO 2020/225057

(56) Entgegenhaltungen:
- EP-A1- 2 683 071
- DE-A1- 102009 044 944
- US-A1- 2005 052 886
- US-A1- 2005 236 900
- US-A1- 2007 058 398
- US-A1- 2010 259 103
- US-A1- 2011 305 051

## Beschreibung

Die vorliegende Erfindung betrifft eine Anlaufschaltung für eine Spannungsversorgung einer Steuervorrichtung, insbesondere einer Steuervorrichtung für einen elektrischen Stromrichter. Ferner betrifft die vorliegende Erfindung eine Ansteuerschaltung für einen elektrischen Stromrichter sowie ein Verfahren zur Spannungsversorgung einer Steuervorrichtung, insbesondere einer Steuervorrichtung für einen elektrischen Stromrichter.

### Stand der Technik

Elektrische Stromrichter, beispielsweise Wechselrichter, finden in zahlreichen Anwendungsgebieten Einsatz. Beispielsweise werden elektrische Stromrichter eingesetzt, um in einem Elektrofahrzeug aus einer elektrischen Gleichspannung eine Spannung zu erzeugen, welche die Elektromotoren des Elektrofahrzeugs ansteuert. Hierzu müssen die Schaltelemente eines solchen Stromrichters gezielt angesteuert werden. Die Steuersignale hierfür werden mittels einer Steuervorrichtung erzeugt und an den jeweiligen Schaltelementen bereitgestellt.

Die Druckschrift EP 1531543 A2 offenbart ein Verfahren zur Stromversorgung eines mehrsträngigen, elektrisch kommutierbaren, durch Pulsweitenmodulation gesteuerten Elektromotors aus einem Gleichspannungsnetz.

Für die Spannungsversorgung der Steuervorrichtung eines Stromrichters kann eine redundante Spannungserzeugung vorgesehen oder sogar gefordert werden. Beispielsweise kann einerseits die Spannungsversorgung direkt über die Komponenten des Wechselrichters mit der Steuerschaltung realisiert werden. Darüber hinaus kann eine redundante Spannungsversorgung, beispielsweise mittels einer Hochvolt-Flyback-Schaltung oder ähnlichem realisiert werden.

Für einen zuverlässigen Betrieb eines Stromrichters ist eine sichere Spannungsversorgung der Steuervorrichtung für den Stromrichter wünschenswert.

### Offenbarung

Die vorliegende Erfindung schafft eine Anlaufschaltung für eine Spannungsversorgung einer Steuervorrichtung, insbesondere einer Steuervorrichtung für einen elektrischen Stromrichter, sowie ein Verfahren zur Spannungsversorgung einer Steuervorrichtung mit den Merkmalen der unabhängigen Patentansprüche. Weitere vorteilhafte Ausführungsformen sind Gegenstand der abhängigen Patentansprüche.

### Demgemäß ist vorgesehen:

Eine Anlaufschaltung für eine Spannungsversorgung einer Steuervorrichtung, insbesondere einer Steuervorrichtung für einen elektrischen Stromrichter. Die Anlaufschaltung umfasst einen ersten Eingangsanschluss und einen zweiten Eingangsanschluss. Der erste Eingangsanschluss ist dazu ausgelegt, mit einer elektrischen Energiequelle gekoppelt zu werden. Der zweite Eingangsanschluss ist dazu ausgelegt, mit einem Ausgangsanschluss der Spannungsversorgung für die Steuervorrichtung gekoppelt zu werden. Die Anlaufschaltung ist dazu ausgelegt, in einem ersten Betriebsmodus aus einer an dem ersten Eingangsanschluss bereitgestellten ersten elektrischen Spannung von der elektrischen Energiequelle eine elektrische Spannung zur Versorgung der Steuervorrichtung zu erzeugen. Die Anlaufschaltung ist ferner dazu ausgelegt, die erzeugte Spannung an der Steuervorrichtung bereitzustellen. Das Erzeugen der ersten elektrischen Spannung und das Bereitstellen an der Steuervorrichtung erfolgt insbesondere dann, wenn eine elektrische Spannung an dem zweiten Eingangsanschluss einen vorgegebenen ersten Schwellwert unterschreitet. Die Anlaufschaltung ist weiterhin dazu ausgelegt, in einem zweiten Betriebsmodus eine an dem zweiten Eingangsanschluss bereitgestellte zweite elektrische Spannung an der Steuervorrichtung bereitzustellen. Das Bereitstellen der zweiten elektrischen Spannung an dem zweiten Eingangsanschluss erfolgt insbesondere dann, wenn die elektrische Spannung an dem zweiten Eingangsanschluss einen vorgegebenen zweiten Schwellwert überschreitet. Weiterhin ist die Anlaufschaltung dazu ausgelegt, in dem ersten oder zweiten Betriebsmodus ein Steuersignal zum Aktivieren der Spannungsversorgung der Steuervorrichtung auszugeben, wenn eine elektrische Spannung an dem ersten Eingangsanschluss einen vorgegebenen dritten Schwellwert überschreitet. Die Anlaufschaltung ist darüber hinaus dazu ausgelegt, in einem dritten Betriebsmodus ein Steuersignal zum Deaktivieren der Spannungsversorgung der Steuervorrichtung auszugeben, wenn die elektrische Spannung an dem ersten Eingangsanschluss den vorgegebenen dritten Schwellwert unterschreitet.

### Weiterhin ist vorgesehen:

Eine Ansteuerschaltung für einen elektrischen Stromrichter mit einer Steuervorrichtung, einer Spannungsversorgungsschaltung und einer erfindungsgemäßen Anlaufschaltung. Die Steuervorrichtung ist dazu ausgelegt, Ansteuersignale für den elektrischen Stromrichter zu generieren und an dem Stromrichter bereitzustellen. Die Spannungsversorgungsschaltung ist dazu ausgelegt, eine elektrische Spannung zur Energieversorgung der Steuervorrichtung bereitzustellen. Insbesondere kann die Spannungsversorgungsschaltung dazu ausgelegt sein, eine elektrische Spannung zur Energieversorgung der Steuervorrichtung unter Verwendung einer elektrischen Spannung von dem Stromrichter bereitzustellen.

### Schließlich ist vorgesehen:

Ein Verfahren zur Spannungsversorgung einer Steuervorrichtung, insbesondere einer Steuervorrichtung für einen elektrischen Stromrichter. Das Verfahren umfasst einen Schritt zum Erzeugen einer elektrischen Spannung zur Versorgung der Steuervorrichtung aus einer an einem ersten Eingangsanschluss bereitgestellten ersten elektrischen Spannung von einer elektrischen Energiequelle in einem ersten Betriebsmodus, und das Bereitstellen der erzeugten elektrischen Spannung an der Steuervorrichtung, wenn eine elektrische Spannung an einem zweiten Eingangsanschluss, der mit der Spannungsversorgung der Steuervorrichtung gekoppelt ist, einen vorgegebenen ersten Schwellwert unterschreitet. Das Verfahren umfasst weiterhin einen Schritt zum Bereitstellen einer an dem zweiten Eingangsanschluss anliegenden zweiten elektrischen Spannung an der Steuervorrichtung in einem zweiten Betriebsmodus, wenn die elektrische Spannung an dem zweiten Eingangsanschluss einen vorgegebenen zweiten Schwellwert überschreitet. Ferner umfasst das Verfahren einen Schritt zum Aktivieren einer Spannungsversorgung der Steuervorrichtung in dem ersten oder zweiten Betriebsmodus, wenn eine elektrische Spannung an dem ersten Eingangsanschluss einen vorgegebenen dritten Schwellwert überschreitet. Schließlich umfasst das Verfahren einen Schritt zum Deaktivieren der Spannungsversorgung der Steuervorrichtung in einem dritten Betriebsmodus, wenn die elektrische Spannung an dem ersten Eingangsanschluss den vorgegebenen dritten Schwellwert unterschreitet.

### Vorteile der Erfindung

Die vorliegende Erfindung ermöglicht eine sichere und zuverlässige Spannungsversorgung einer Steuervorrichtung für einen elektrischen Stromrichter. Insbesondere kann durch das flexible Einstellen der Spannungsschwellen für den Wechsel in den ersten bzw. zweiten Betriebsmodus jeweils ein stabiles Betriebsverhalten erreicht werden. Beispielsweise kann durch ein geeignetes Einstellen der Schwellwerte ein häufiger Wechsel zwischen den Betriebszuständen aufgrund von kleineren Störungen oder kurzfristigen Spannungsänderungen verhindert werden. Weiterhin ermöglicht die flexible Konfiguration der Schaltschwellen auch eine zuverlässige Konfiguration der Betriebspunkte, sodass gefährliche Betriebszustände, welche beispielsweise zu einer Überhitzung oder ähnlichem führen können, zuverlässig verhindert werden können.

Darüber hinaus erfolgt der Wechsel zwischen den einzelnen Betriebszuständen abhängig von den vorgegebenen Schaltschwellen durch einen Zustandswechsel innerhalb der Anlaufschaltung. Auf diese Weise ist die Anlaufschaltung unabhängig von externen Ansteuersignalen, insbesondere unabhängig von Softwarekomponenten externer Baugruppen.

Gemäß einer Ausführungsform ist die erste Schaltschwelle, bei deren Unterschreiten die Anlaufschaltung in den ersten Betriebsmodus wechselt, größer als die zweite Schaltschwelle, bei deren Überschreiten die Anlaufschaltung in den zweiten Betriebsmodus wechselt. Auf diese Weise kann durch die Differenz der beiden Schaltschwellen eine Hysterese definiert werden. Eine solche Hysterese verhindert einen frühzeitigen Wechsel zwischen den einzelnen Betriebsmodi aufgrund von kleineren Störungen oder kurzfristigen Eingangsspannungsänderungen. Dies ermöglicht einen stabilen und zuverlässigen Betrieb.

Gemäß einer Ausführungsform umfasst die Anlaufschaltung eine Tiefsetzschaltung. Die Tiefsetzschaltung ist dazu ausgelegt, eine erste elektrische Spannung von dem ersten Eingangsanschluss in eine elektrische Spannung mit einer vorbestimmten Spannungshöhe zu konvertieren. Die konvertierte Spannung kann an der Steuervorrichtung bereitgestellt werden. Insbesondere kann die konvertierte Spannung als Spannungsversorgung der Steuervorrichtung bereitgestellt werden. Mittels einer solchen Tiefsetzschaltung oder einem anderen Gleichspannungswandler kann auf diese Weise eine beliebige externe Gleichspannung in eine Gleichspannung konvertiert werden, die während des Anlaufens bzw. Hochfahrens der Steuervorrichtung für den Stromrichter die Spannungsversorgung des Stromrichters gewährleisten kann.

Gemäß einer Ausführungsform ist der erste Eingangsanschluss dazu ausgelegt, mit einer Hochvoltbatterie, insbesondere einer Hochvoltbatterie eines Elektrofahrzeugs gekoppelt zu werden. Auf diese Weise kann durch die Hochvoltbatterie die Spannungsversorgung für die Steuerschaltung des Stromrichters bereitgestellt werden, solange der Stromrichter selbst noch nicht dazu in der Lage ist, die Spannungsversorgung selbst bereitzustellen.

In einer Ausführungsform kann die zweite elektrische Spannung, das heißt die am Ausgangsanschluss der Spannungsversorgung der Steuervorrichtung bereitgestellte elektrische Spannung, aus einer elektrischen Spannung des Stromrichters erzeugt werden. Beispielsweise kann der Wechselrichter, insbesondere die Steuervorrichtung des Wechselrichters, hierzu eine Spannungsversorgungsschaltung umfassen. Beispielsweise kann es sich bei der Spannungsversorgungsschaltung um einen Schaltkreis, insbesondere einen integrierten Schaltkreis handeln, welcher aus einer in dem Wechselrichter verfügbaren Spannung eine geeignete Spannung zur Spannungsversorgung der Steuervorrichtung erzeugt.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

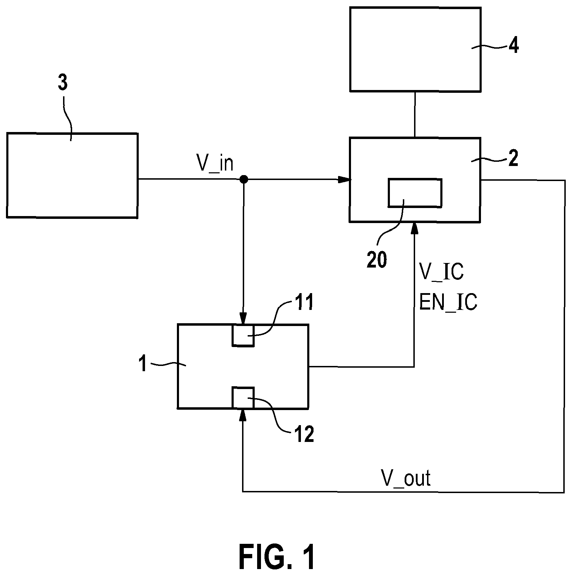

Weitere Merkmale und Vorteile der vorliegenden Erfindung werden nachfolgend anhand der Figuren erläutert. Dabei zeigen:
- .Figur 1:: eine schematische Darstellung eines Blockschaubilds eines elektrischen Antriebssystems mit einem Stromrichter und einer Anlaufschaltung gemäß einer Ausführungsform;
- Figur 2:: eine schematische Darstellung eines Zustandsdiagramms, wie es einer Anlaufschaltung gemäß einer Ausführungsform zugrunde liegt;
- Figur 3:: eine schematische Darstellung eines Prinzipschaltbilds, wie es einer Anlaufschaltung gemäß einer Ausführungsform zugrunde liegt; und
- Figur 4:: ein Ablaufdiagramm, wie es einem Verfahren zur Spannungsversorgung gemäß einer Ausführungsform zugrunde liegt.

### Beschreibung der Ausführungsformen

Figur 1 zeigt ein Blockschaubild eines elektrischen Antriebssystems mit einer Anlaufschaltung 1 für eine Spannungsversorgung einer Steuervorrichtung für einen elektrischen Stromrichter 2 gemäß einer Ausführungsform. Das elektrische Antriebssystem umfasst eine elektrische Maschine 4, eine Spannungsversorgung 3, beispielsweise eine Hochvoltbatterie oder eine andere Gleichspannungsquelle, einen Wechselrichter 2 und eine Anlaufschaltung 1. Die Gleichspannungsquelle 3 an dem einen Wechselrichter 2 eine Gleichspannung bereit. Diese Gleichspannung wird von dem Wechselrichter 2 in eine elektrische Wechselspannung konvertiert, welche dazu geeignet ist, die elektrische Maschine 4 gemäß externen Sollwertvorgaben (hier nicht dargestellt) anzusteuern. Hierzu können mehrere Schaltelemente, beispielsweise Halbleiterschaltelemente, des Wechselrichters 2 mit entsprechenden Steuersignalen angesteuert werden. Zur Erzeugung der Steuersignale umfasst der Wechselrichter 2 eine Steuervorrichtung 20, welche die entsprechenden Steuersignale bereitstellt. Diese Steuervorrichtung 20 erfordert eine geeignete Spannungsversorgung. Während des Betriebs des Wechselrichters 2 kann die hierzu erforderliche Spannungsversorgung durch eine in dem Wechselrichter 2 verfügbare elektrische Spannung selbst erzeugt werden. Beispielsweise kann innerhalb des Wechselrichters 2 eine solche Versorgungsspannung V_out erzeugt werden. Beispielsweise kann die Versorgungsspannung mittels eines geeigneten Schaltkreises, beispielsweise eines integrierten Schaltkreises wie zum Beispiel einem Regel-IC oder ähnlichem erzeugt werden.

Während des Betriebs des Wechselrichters 2 existieren gegebenenfalls Betriebszustände, beispielsweise während des Starts des Systems, insbesondere dem Start des Wechselrichters und der Steuerschaltung 20, bei welcher dieses Regel-IC sich noch nicht selbstständig mit Spannung versorgt werden kann. In diesem Fall ist eine zusätzliche, externe Spannungsversorgung erforderlich. Diese externe Spannungsversorgung, sowie das Umschalten zwischen interner und externer Spannungsversorgung kann beispielsweise mittels einer Anlaufschaltung 1 realisiert werden. Das Funktionsprinzip dieser Anlaufschaltung 1 wird nachfolgend näher erläutert.

An einem ersten Eingangsanschluss 11 der Anlaufschaltung 1 kann eine externe Spannungsversorgung, beispielsweise eine Spannungsversorgung von der Gleichspannungsquelle 3 bereitgestellt werden. Während des Hochfahrens bzw. Anlaufens des Wechselrichters 2 kann die Anlaufschaltung 1 aus der von der Gleichspannungsquelle 3 bereitgestellten Spannung die erforderliche Spannungsversorgung für den Wechselrichter 2, insbesondere die Steuerschaltung 20 erzeugen. Nachdem der Wechselrichter 2 eine eigenständige Spannungsversorgung aufrechterhalten kann, kann die von dem Wechselrichter 2 erzeugte Spannung V_out die Spannungsversorgung übernehmen. Hierzu wird die von dem Wechselrichter 2 erzeugte Spannung V_out an einem zweiten Eingangsanschluss 12 der Anlaufschaltung 1 bereitgestellt. Die Anlaufschaltung 1 vergleicht die an dem zweiten Eingangsanschluss 12 bereitgestellte elektrische Spannung V_out des Wechselrichters 2 mit vorgegebenen Schwellwerten und steuert unter Verwendung dieser Schwellwerte die Spannungsversorgung V_IC des Wechselrichters 2, insbesondere der Steuervorrichtung 20 für den Wechselrichter 2. Hierzu kann entweder die von dem Wechselrichter 2 bereitgestellte Spannung V_out als Spannungsversorgung V_IC an den Wechselrichter bereitgestellt werden, oder alternativ kann die Anlaufschaltung die Spannung an dem Wechselrichter 2 bereitstellen, welche aus der von der Gleichspannungsquelle 3 am ersten Eingangsanschluss 11 bereitgestellten Gleichspannung erzeugt wurde. Die Anlaufschaltung 1 stellt somit an dem Wechselrichter 2 eine Spannungsversorgung V_IC bereit, welche es dem Wechselrichter 2 ermöglicht, die interne Spannungsregelung, beispielsweise das Regel-IC, mit Spannung zu versorgen, um die interne Spannungsversorgung aufrecht zu erhalten.

Darüber hinaus kann die Anlaufschaltung 1 ein weiteres Signal EN_IC an dem Wechselrichter bereitstellen, welches die interne Spannungsversorgungsschaltung des Wechselrichters 2 aktiviert bzw. deaktiviert. Beispielsweise kann die interne Spannungsversorgung durch das Aktivierungssignal EN_IC aktiviert werden, wenn die Anlaufschaltung 1 eine stabile Spannung V_IC entweder auf Grundlage der Spannung von der Gleichspannungsquelle 3 oder der von dem Wechselrichter 2 bereitgestellten Spannung V_out bereitstellt. Andernfalls, wenn keine stabile Spannung zur Spannungsversorgung der Spannungsversorgungsschaltung in dem Wechselrichter 2 bereitgestellt wird, kann das Steuersignal EN_IC die Spannungsversorgungsschaltung in dem Wechselrichter 2 deaktivieren.

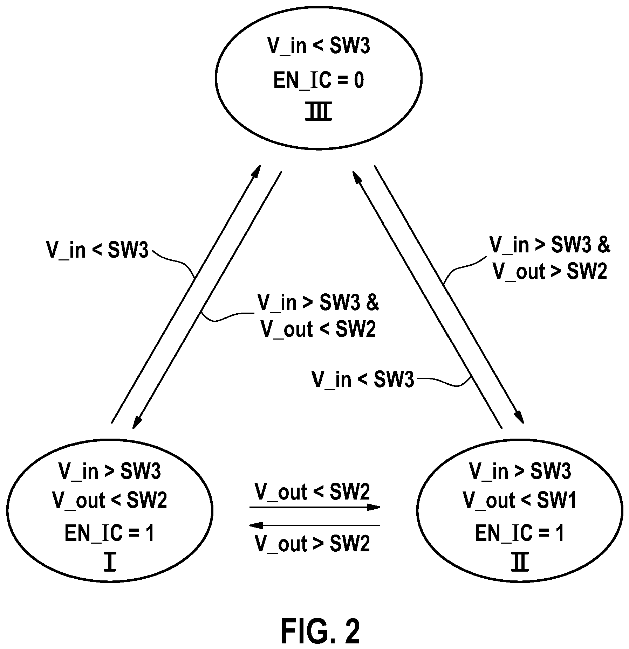

Figur 2 zeigt eine schematische Darstellung eines Zustandsdiagramms für die Betriebsmodi der Anlaufschaltung 1 gemäß einer Ausführungsform. In einem ersten Betriebsmodus I während des Starts kann von der Gleichspannungsquelle 3 eine ausreichend hohe Gleichspannung an der Anlaufschaltung 1 bereitgestellt werden. Da der Wechselrichter 2 selbst jedoch noch nicht aktiv ist, unterschreitet die von dem Wechselrichter 2 bereitgestellte Ausgangsspannung V_out einen vorgegebenen ersten Schwellwert SW1. In diesem ersten Betriebszustand wird daher die Anlaufschaltung 1 an dem Wechselrichter 2 eine Spannung V_IC unter Verwendung der von der Gleichspannungsquelle 3 bereitgestellten Gleichspannung generieren und an dem Wechselrichter 2 bereitstellen. Im Falle eines elektrischen Antriebssystems für ein Elektrofahrzeug kann beispielsweise aus der Spannung einer Hochvoltbatterie 3 eine Spannung V_IC für den Wechselrichter in Höhe von ca. 13 V generiert werden. Darüber hinaus wird durch ein entsprechendes Signalisieren des Aktivierungssignals EN_IC die Spannungsversorgungsschaltung des Wechselrichters 2 aktiviert.

Nachdem die Spannungsversorgungsschaltung des Wechselrichters 2 eine stabile Spannungsversorgung durch eine elektrische Spannung innerhalb des Wechselrichters 2 gewährleisten kann und daraufhin die Ausgangsspannung V_out an dem Wechselrichter 2 einen vorgegebenen zweiten Schwellwert SW2 überschreitet, wechselt die Anlaufschaltung 1 in einen zweiten Betriebsmodus II. In diesem zweiten Betriebsmodus II wird durch die Anlaufschaltung 1 die Spannungsversorgungsschaltung innerhalb des Wechselrichters 2 von der Ausgangsspannung V_out des Wechselrichters 2 versorgt. Darüber hinaus wird die Spannungsversorgungsschaltung durch entsprechendes Signalisieren des Aktivierungssignals EN_IC aktiviert. In diesem Fall ist es nicht länger erforderlich, dass die Anlaufschaltung 1 die Spannungsversorgung des Wechselrichters unter Verwendung der Gleichspannung von der Gleichspannungsquelle 3 bereitstellt.

Um bei geringfügigen Störungen oder Spannungsschwankungen einen schnellen Wechsel zwischen dem ersten und zweiten Betriebszustand I bzw. II zu verhindern, kann die zweite Schaltschwelle SW2 höher eingestellt werden, als die erste Schaltschwelle SW1.

Liegt die von der Gleichspannungsquelle 3 bereitgestellte elektrische Gleichspannung, beispielsweise die von einer Hochvoltbatterie eines Elektrofahrzeugs bereitgestellte Spannung, unterhalb eines vorgegebenen dritten Schwellwerts SW3, beispielsweise weil die Hochvoltbatterie 3 von den übrigen Komponenten des elektrischen Antriebssystems getrennt wurde, so wechselt die Anlaufschaltung in einen dritten Betriebszustand, beispielsweise einen Ruhezustand. In diesem Fall wird die Spannungsversorgungsschaltung, beispielsweise das Regel-IC, des Wechselrichters 2 deaktiviert. Ferner kann gegebenenfalls die von dem Wechselrichter 2 bereitgestellte Ausgangsspannung V_out als Spannungsversorgung an dem Wechselrichter 2, insbesondere der Steuerschaltung des Wechselrichters 2 bereitgestellt werden.

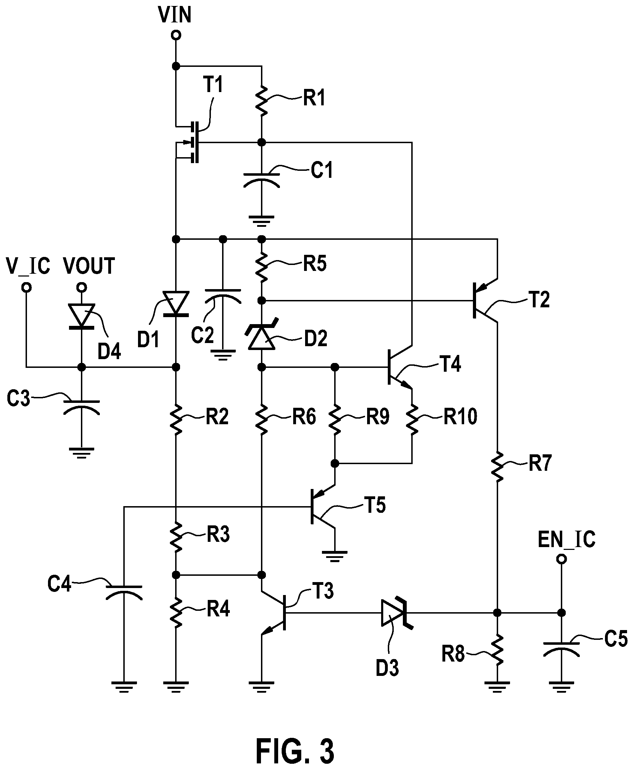

Figur 3 zeigt eine schematische Darstellung eines Prinzipschaltbilds, wie es einer Anlaufschaltung 1 für die Spannungsversorgung einer Steuervorrichtung eines Stromrichters zugrunde liegen kann. Um die Beschreibung nicht über Gebühr auszudehnen, wird für den konkreten Schaltungsaufbau auf die entsprechende Figur 3 verwiesen, und im Weiteren lediglich einige relevante Komponenten bzw. Schaltungsgruppen näher erläutert. Die elektrische Spannung V_IC für die Versorgung der Spannungsversorgungsschaltung des Wechselrichters 2, beispielsweise für ein geeignetes Regel_IC oder ähnliches, kann entweder über den Halbleiterschalter T1 und die Diode D1 aus der Gleichspannung V_in von der Gleichspannungsquelle 3 erzeugt werden. Hierbei kann die Höhe der Ausgangsspannung V_IC während des ersten Betriebsmodus beispielsweise mittels R1 eingestellt werden. Alternativ kann bei einer ausreichend hohen Spannung der Ausgangsspannung V_out von dem Wechselrichter 2 die Spannung V_IC für die Spannungsversorgungsschaltung des Wechselrichters 2 über die Diode D4 bereitgestellt werden.

Nach dem Anstieg der Spannung V_in von der Gleichspannungsquelle 3 beginnt zunächst der Transistor T1 zu leiten. Direkt im Anschluss daran beginnt die Spannung an dem Widerstand R4 zu steigen. Die Aktivierungsschwelle kann dabei über die Ketten R2-R3-R4 und R5-R6-D2 eingestellt werden. Nachdem die Aktivierungsschwelle überschritten ist, beginnt T2 zu leiten, wodurch das Aktivierungssignal EN_IC aktiviert wird. Die Spannung wird hierbei durch die Diode D3 und die Basis-Emitter-Spannung von T3 beschränkt. Nachdem der Transistor T3 durchgeschaltet ist, entfällt die Hysterese aufgrund des Spannungsabfalls über R4. Gleichzeitig ist der Zweig T4-R9-R10-T5 aktiviert.

Beim Ausschalten sinkt die Spannung V_in der Gleichspannungsquelle, beispielsweise durch Trennen der Hochvoltbatterie von dem elektrischen Antriebssystem, unter die Zener-Spannung der Diode D2 und somit sinkt der Basisstrom von T2 unter die Schaltbedingung. Daher kippt die Schaltung nach dem Unterschreiten des erforderlichen Basisstroms von T2 zurück in den Ausgangszustand.

Im Falle eines elektrischen Antriebssystems für ein Elektrofahrzeug kann beispielsweise die Gleichspannungsquelle 3 eine Hochvoltbatterie eines Elektrofahrzeugs umfassen und somit in der Höhe von 300 bis 400 V, gegebenenfalls auch höher, beispielsweise 800 V oder mehr liegen. Der erste Schwellwert SW1 für den Wechsel in den zweiten Betriebszustand II kann beispielsweise in der Höhe von ca. 14 V liegen. Der zweite Schwellwert SW2 für den Wechsel in den ersten Betriebszustand kann beispielsweise in der Höhe von ca. 13 V liegen. Ferner kann auch die elektrische Spannung, welche die Anlaufschaltung im ersten Betriebszustand für die Spannungsversorgung des Wechselrichters 2 generiert, in der Höhe von ca. 13 V liegen. Selbstverständlich sind je nach Anwendungsfall auch andere Schwellwerte bzw. Spannungshöhen möglich.

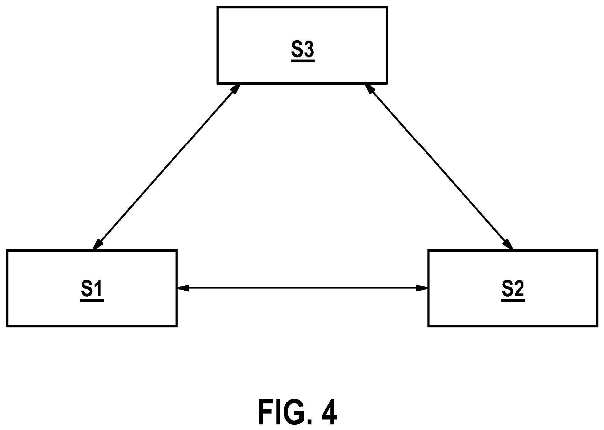

Figur 4 zeigt eine schematische Darstellung eines Ablaufdiagramms, wie es einem Verfahren zur Spannungsversorgung einer Steuervorrichtung, insbesondere einer Steuervorrichtung für einen Stromrichter zugrunde liegt. In Schritt S1 wird eine elektrische Spannung V_IC zur Versorgung der Steuervorrichtung erzeugt. Die elektrische Spannung kann insbesondere aus einer an einem ersten Eingangsanschluss 11 bereitgestellten elektrischen Spannung von einer elektrischen Energiequelle 2 erzeugt werden. Die erzeugte elektrische Spannung kann an der Steuervorrichtung 20 für den elektrischen Stromrichter 2 bereitgestellt werden. Insbesondere kann der Schritt S1 in einem ersten Betriebsmodus ausgeführt werden, wenn eine elektrische Spannung an einem zweiten Eingangsanschluss 12 einen vorgegebenen ersten Schwellwert SW1 unterschreitet. Der zweite Eingangsanschluss 12 kann mit der Spannungsversorgung V_out der Steuervorrichtung 20 gekoppelt sein.

In einem zweiten Betriebsmodus kann in Schritt S2 eine an dem zweiten Eingangsanschluss 12 anliegende zweite elektrische Spannung V_out an der Steuervorrichtung 20 bereitgestellt werden. Insbesondere erfolgt das Bereitstellen der zweiten elektrischen Spannung V_out in dem zweiten Betriebsmodus, wenn die elektrische Spannung V_out an dem zweiten Eingangsanschluss 12 einen vorgegebenen zweiten Schwellwert SW2 überschreitet. Der zweite Schwellwert SW2 kann dabei größer sein als der erste Schwellwert SW1. Insbesondere kann die Differenz zwischen dem zweiten Schwellwert SW2 und dem ersten Schwellwert SW1 eine vorgegebene Hysterese umfassen.

Weiterhin kann sowohl in dem ersten Betriebsmodus als auch in dem zweiten Betriebsmodus eine Spannungsversorgung der Steuervorrichtung 20 aktiviert werden, wenn eine elektrische Spannung V_in an dem ersten Eingangsanschluss 11 einen vorgegebenen dritten Schwellwert SW3 überschreitet.

In einem dritten Schritt S3 kann die Spannungsversorgung der Steuervorrichtung 20 in einem dritten Betriebsmodus deaktiviert werden, wenn die elektrische Spannung V_in an dem ersten Eingangsanschluss 11 den vorgegebenen dritten Schwellwert SW3 unterschreitet.

Zusammenfassend betrifft die vorliegende Erfindung eine Spannungsversorgung für eine Steuervorrichtung eines Stromrichters. Insbesondere wird eine zuverlässige und stabile Spannungsversorgung für die Steuerung des Stromrichters ermöglicht, die einen stabilen Betrieb ermöglicht, bei dem zwischen einer autarken Spannungsversorgung durch den Wechselrichter selbst und einer redundanten Spannungsversorgung durch eine externe Quelle gewechselt werden kann.

## Patentansprüche

1. Anlaufschaltung (1) für eine Spannungsversorgung einer Steuervorrichtung (20) eines elektrischen Stromrichters (2), mit:
einem ersten Eingangsanschluss (11), der dazu ausgelegt ist, mit einer elektrischen Energiequelle (3) gekoppelt zu werden;
einem zweiten Eingangsanschluss (12), der dazu ausgelegt ist, mit einem Ausgangsanschluss der Spannungsversorgung der Steuervorrichtung (20) gekoppelt zu werden;
wobei die Anlaufschaltung (1) dazu ausgelegt ist,
in einem ersten Betriebsmodus aus einer an dem ersten Eingangsanschluss (11) bereitgestellten ersten elektrischen Spannung (V_in) von der elektrischen Energiequelle (3) eine elektrische Spannung (V_IC) zur Versorgung der Steuervorrichtung (20) zu erzeugen und an der Steuervorrichtung (20) bereitzustellen, wenn eine elektrische Spannung (V_out) an dem zweiten Eingangsanschluss (12) einen vorgegebenen ersten Schwellwert (SW1) unterschreitet,
in einem zweiten Betriebsmodus eine an dem zweiten Eingangsanschluss (12) bereitgestellte zweite elektrische Spannung (V_out) an der Steuervorrichtung (20) bereitzustellen, wenn die elektrische Spannung (V_out) an dem zweiten Eingangsanschluss (12) einen vorgegebenen zweiten Schwellwert (SW2) überschreitet,
in dem ersten oder zweiten Betriebsmodus ein Steuersignal (EN_IC) zum Aktivieren der Spannungsversorgung der Steuervorrichtung (20) auszugeben, wenn eine elektrische Spannung (V_in) an dem ersten Eingangsanschluss (11) einen vorgegebenen dritten Schwellwert (SW3) überschreitet, und
in einem dritten Betriebsmodus ein Steuersignal (EN_IC) zum Deaktivieren der Spannungsversorgung der Steuervorrichtung (20) auszugeben, wenn die elektrische Spannung (V_in) an dem ersten Eingangsanschluss (11) den vorgegebenen dritten Schwellwert (SW3) unterschreitet.

2. Anlaufschaltung (1) nach Anspruch 1, wobei die Anlaufschaltung (1) eine Tiefsetzschaltung umfasst, die dazu ausgelegt ist, die erste elektrischen Spannung (V_in) am ersten Eingangsanschluss (11) in eine elektrische Spannung mit einer vorbestimmten Spannungshöhe zu konvertieren und an der Steuervorrichtung (20) bereitzustellen.

3. Anlaufschaltung nach einem der Ansprüche 1 bis 2, wobei der erste Eingangsanschluss (11) dazu ausgelegt ist, mit einer Hochvoltbatterie eines Elektrofahrzeugs gekoppelt zu werden.

4. Ansteuerschaltung für einen elektrischen Stromrichter (2), mit:
einer Steuervorrichtung (20), die dazu ausgelegt ist, Ansteuersignale für den elektrischen Stromrichter (2) zu generieren und an dem Stromrichter (2) bereitzustellen;
einer Spannungsversorgungsschaltung, die dazu ausgelegt ist, eine elektrische Spannung zur Energieversorgung der Steuervorrichtung (20) bereitzustellen; und
einer Anlaufschaltung (1) nach einem der Ansprüche 1 bis 3.

5. Ansteuerschaltung nach Anspruch 4, wobei die
Spannungsversorgungsschaltung dazu ausgelegt ist, die elektrische Spannung zur Energieversorgung der Steuervorrichtung (20) aus einer elektrischen Spannung des elektrischen Stromrichters (2) zu erzeugen.

6. Verfahren zur Spannungsversorgung einer Steuervorrichtung (20) für einen elektrischen Stromrichter (2), mit den Schritten:
Erzeugen (S1) einer elektrischen Spannung zur Versorgung der Steuervorrichtung (20) aus einer an einem ersten Eingangsanschluss (11) bereitgestellten ersten elektrischen Spannung (V_in) von der elektrischen Energiequelle (3) in einem ersten Betriebsmodus, und Bereitstellen der erzeugten elektrischen Spannung (V_IC) an der Steuervorrichtung (20), wenn eine elektrische Spannung (V_out) an einem zweiten Eingangsanschluss (12) einen vorgegebenen ersten Schwellwert (SW1) unterschreitet, wobei der zweite Eingangsanschluss (12) mit der Spannungsversorgung der Steuervorrichtung (20) gekoppelt ist;
Bereitstellen (S2) einer an dem zweiten Eingangsanschluss (12) anliegenden zweiten elektrischen Spannung (V_out) an der Steuervorrichtung (20) in einem zweiten Betriebsmodus, wenn die elektrische Spannung (V_out) an dem zweiten Eingangsanschluss (12) einen vorgegebenen zweiten Schwellwert (SW2) überschreitet,
Aktivieren einer Spannungsversorgung der Steuervorrichtung (20) in dem ersten oder zweiten Betriebsmodus, wenn eine elektrische Spannung (V_in) an dem ersten Eingangsanschluss (11) einen vorgegebenen dritten Schwellwert (SW2) überschreitet, und
Deaktivieren (S3) der Spannungsversorgung der Steuervorrichtung (20) in einem dritten Betriebsmodus, wenn die elektrische Spannung an dem ersten Eingangsanschluss (11) den vorgegebenen dritten Schwellwert (SW3) unterschreitet.

7. Verfahren nach Anspruch 6, wobei der zweite Schwellwert größer (SW2) ist als der erste Schwellwert (SW1).

## Claims

1. Starting circuit (1) for a voltage supply of a controller (20) of an electrical power converter (2), having:
a first input connection (11) which is designed to be coupled to an electrical energy source (3);
a second input connection (12) which is designed to be coupled to an output connection of the voltage supply of the controller (20);
wherein the starting circuit (1) is designed
in a first operating mode, to generate an electrical voltage (V_IC) for supplying the controller (20) from a first electrical voltage (V_in) provided at the first input connection (11) by the electrical energy source (3) and to provide said voltage at the controller (20) if an electrical voltage (V_out) at the second input connection (12) undershoots a predefined first threshold value (SW1),
in a second operating mode, to provide a second electrical voltage (V_out) provided at the second input connection (12) at the controller (20) if the electrical voltage (V_out) at the second input connection (12) exceeds a predefined second threshold value (SW2),
in the first or second operating mode, to output a control signal (EN_IC) for activating the voltage supply of the controller (20) if an electrical voltage (V_in) at the first input connection (11) exceeds a predefined third threshold value (SW3), and
in a third operating mode, to output a control signal (EN_IC) for deactivating the voltage supply of the controller (20) if the electrical voltage (V_in) at the first input connection (11) undershoots the predefined third threshold value (SW3).

2. Starting circuit (1) according to Claim 1, wherein the starting circuit (1) comprises a step-down circuit which is designed to convert the first electrical voltage (V_in) at the first input connection (11) into an electrical voltage with a predetermined voltage level and to provide said voltage at the controller (20).

3. Starting circuit according to one of Claims 1 to 2, wherein the first input connection (11) is designed to be coupled to a high-voltage battery of an electric vehicle.

4. Actuation circuit for an electrical power converter (2), having:
a controller (20) which is designed to generate actuation signals for the electrical power converter (2) and to provide said actuation signals at the power converter (2);
a voltage supply circuit which is designed to provide an electrical voltage for supplying energy to the controller (20); and
a starting circuit (1) according to one of Claims 1 to 3.

5. Actuation circuit according to Claim 4, wherein the voltage supply circuit is designed to generate the electrical voltage for supplying energy to the controller (20) from an electrical voltage of the electrical power converter (2).

6. Method for supplying voltage to a controller (20) for an electrical power converter (2), having the steps of:
generating (S1) an electrical voltage for supplying the controller (20) from a first electrical voltage (V_in) provided at a first input connection (11) by the electrical energy source (3) in a first operating mode, and providing the generated electrical voltage (V_IC) at the controller (20) if an electrical voltage (V_out) at a second input connection (12) undershoots a predefined first threshold value (SW1), wherein the second input connection (12) is coupled to the voltage supply of the controller (20);
providing (S2) a second electrical voltage (V_out) present at the second input connection (12) at the controller (20) in a second operating mode if the electrical voltage (V_out) at the second input connection (12) exceeds a predefined second threshold value (SW2),
activating a voltage supply of the controller (20) in the first or second operating mode if an electrical voltage (V_in) at the first input connection (11) exceeds a predefined third threshold value (SW2), and
deactivating (S3) the voltage supply of the controller (20) in a third operating mode if the electrical voltage at the first input connection (11) undershoots the predefined third threshold value (SW3).

7. Method according to Claim 6, wherein the second threshold value (SW2) is greater than the first threshold value (SW1).

## Revendications

1. Circuit de démarrage (1) pour une alimentation électrique d'un dispositif de commande (20) d'un convertisseur électrique (2), comprenant :
une première borne d'entrée (11), qui est conçue pour être couplée à une source d'énergie électrique (3) ;
une deuxième borne d'entrée (12), qui est conçue pour être couplée à une borne de sortie de l'alimentation électrique du dispositif de commande (20),
le circuit de démarrage (1) étant configuré pour,
dans un premier mode de fonctionnement, générer, à partir d'une première tension électrique (V_in) fournie sur la première borne d'entrée (11) par la source d'énergie électrique (3), une tension électrique (V_IC) destinée à alimenter le dispositif de commande (20) et la fournir au dispositif de commande (20) lorsqu'une tension électrique (V_out) sur la deuxième borne d'entrée (12) est inférieure à une première valeur de seuil prédéfinie (SW1),
dans un deuxième mode de fonctionnement, fournir une deuxième tension électrique (V_out), fournie sur la deuxième borne d'entrée (12) au dispositif de commande (20) lorsque la tension (V_out) sur la deuxième borne d'entrée (12) dépasse une deuxième valeur de seuil prédéfinie (SW2),
dans le premier ou le deuxième mode de fonctionnement, délivrer un signal de commande (EN_IC) pour activer l'alimentation électrique du dispositif de commande (20) lorsqu'une tension électrique (V_in) sur la première borne d'entrée (11) dépasse une troisième valeur de seuil prédéfinie (SW3), et
dans un troisième mode de fonctionnement, délivrer un signal de commande (EN_IC) pour désactiver l'alimentation électrique du dispositif de commande (20) lorsque la tension électrique (V_in) sur la première borne d'entrée (11) est inférieure à la troisième valeur de seuil prédéfinie (SW3).

2. Circuit de démarrage (1) selon la revendication 1, le circuit de démarrage (1) comprenant un circuit abaisseur configuré pour convertir la première tension électrique (V_in) sur la première borne d'entrée (11) en une tension électrique présentant un niveau de tension prédéterminé et pour la fournir au dispositif de commande (20).

3. Circuit de démarrage selon l'une quelconque des revendications 1 à 2, dans lequel la première borne d'entrée (11) est configurée pour être couplée à une batterie haute tension d'un véhicule électrique.

4. Circuit de commande pour un convertisseur électrique (2), comprenant :
un dispositif de commande (20), configuré pour générer des signaux de commande destinés au convertisseur électrique (2) et pour les fournir au convertisseur (2) ;
un circuit d'alimentation électrique, configuré pour fournir une tension électrique destinée à alimenter le dispositif de commande (20) ; et
un circuit de démarrage (1) selon l'une quelconque des revendications 1 à 3.

5. Circuit de commande selon la revendication 4, dans lequel le circuit d'alimentation électrique est configuré pour générer la tension électrique afin d'alimenter en énergie le dispositif de commande (20) à partir d'une tension électrique du convertisseur électrique (2).

6. Procédé d'alimentation électrique d'un dispositif de commande (20) destiné à un convertisseur électrique (2), comprenant les étapes suivantes :
générer (S1) une tension électrique pour alimenter le dispositif de commande (20) à partir d'une première tension électrique (V_in) fournie sur une première borne d'entrée (11) par la source d'énergie électrique (3) dans un premier mode de fonctionnement, et fournir la tension électrique générée (V_IC) au dispositif de commande (20) lorsqu'une tension électrique (V_out) sur une deuxième borne d'entrée (12) est inférieure à une première valeur de seuil prédéfinie (SW1), la deuxième borne d'entrée (12) étant couplée à l'alimentation électrique du dispositif de commande (20) ;
fournir (S2) une deuxième tension (V_out) appliquée à la deuxième borne d'entrée (12) au dispositif de commande (20) dans un deuxième mode de fonctionnement lorsque la tension (V_out) sur la deuxième borne d'entrée (12) dépasse une deuxième valeur de seuil prédéfinie (SW2),
activer une alimentation électrique du dispositif de commande (20) dans le premier ou le deuxième mode de fonctionnement lorsqu'une tension électrique (V_in) sur la première borne d'entrée (11) dépasse une troisième valeur de seuil prédéfinie (SW2), et
désactiver (S3) l'alimentation électrique du dispositif de commande (20) dans un troisième mode de fonctionnement lorsque la tension sur la première borne d'entrée (11) est inférieure à la troisième valeur de seuil prédéfinie (SW3).

7. Procédé selon la revendication 6, dans lequel la deuxième valeur de seuil est supérieure (SW2) à la première valeur de seuil (SW1).
